# EUROPEAN PATENT APPLICATION

(11) **EP 4 641 754 A1**
(43) Date of publication of application: **29.10.2025**
(21) Application number: 24839960.2
(22) Date of filing: 01.07.2024
(51) Int. Cl.: H01M 10/44, H01M 10/48, H01M 50/507, H01M 50/509, H01M 50/204

(54) **BATTERY MODULE AND BATTERY PACK INCLUDING SAME**

(30) Priority: 10.07.2023 KR 20230089361
(71) Applicant: LG Energy Solution, Ltd., Seoul 07335 (KR)
(72) Inventor: PARK, Jinsoo, Daejeon 34122 (KR)
(74) Representative: BCKIP Part mbB
(86) International application number: PCT/KR2024/009172
(87) International publication number: WO 2025/014146

(57) **Abstract**

A battery module according to one embodiment of the present disclosure comprises a battery cell stack including a plurality of first battery cells with at least one second battery cell being inserted between the plurality of first battery cells; a module frame that houses the battery cell stack; and a temperature sensor that is located inside the module frame, and detects whether the plurality of first battery cells and the at least one second battery cell are abnormal or not, wherein the second battery cell has a resistance smaller than that of the first battery cell.

## Description

### [TECHNICAL FIELD]

### Cross Citation with Related Application(s)

This application claims prior to and benefit of Korean Patent Application No. 10-2023-0089361 filed on July 10, 2023 in the Korean Intellectual Property Office, the disclosure of which is incorporated herein by reference in its entirety.

The present disclosure relates to a battery module and a battery pack including the same, and more specifically, to a battery module in which a battery cell having a relatively low resistance is inserted into a battery cell stack included in the battery module, and a battery pack including the same. Particularly, the present disclosure relates to a battery module in which when an abnormality is detected in some of the battery cells included in the battery module, a battery cell having a relatively low resistance is discharged at a faster speed to delay thermal propagation between battery cells, and a battery pack including the same.

### [BACKGROUND]

Secondary batteries, which are highly applicable to various products and exhibit superior electrical properties such as high energy density, etc., are not only commonly applied to portable devices, but also universally applied to an electric vehicle or a hybrid electric vehicle and an energy storage system driven by electrical power sources. Such secondary batteries are gaining attention for their primary advantage of remarkably reducing the use of fossil fuels and not generating by-products from the use of energy, making them a new eco-friendly and energy efficient source of energy.

Currently commercialized secondary batteries include a nickel cadmium battery, a nickel hydrogen battery, a nickel zinc battery, a lithium secondary battery, and the like. Among them, the lithium secondary battery has come into the spotlight because it has advantages, for example, hardly exhibiting memory effects compared to nickel-based secondary batteries and thus being freely charged and discharged, and having very low self-discharge rate and high energy density.

Generally, the lithium secondary battery may be classified based on the shape of the exterior material into a cylindrical or prismatic secondary battery in which the electrode assembly is embedded in a metal can, and a pouch type secondary battery in which the electrode assembly is embedded in a pouch made of an aluminum laminate sheet.

Recently, along with a continuous rise of the necessity for a large-capacity secondary battery structure, including the utilization of the secondary battery as an energy storage source, there is a growing demand for a battery pack of middle- or large-sized module structure which is an assembly of battery modules in which a plurality of secondary batteries are connected in series or in parallel. Such a battery module has a structure in which a large number of battery cells are connected to each other in series or in parallel to form a battery cell stack, thereby improving capacity and output. In addition, the battery module may be mounted together with various control and protection systems such as BMS (battery management system) and a cooling system to form a battery pack.

The battery pack has a structure in which a plurality of battery modules are combined, so when some of the battery modules receive an overvoltage or an overcurrent or they are overheated, safety and operation efficiency of the battery pack may be problematic. Particularly, while the capacity of the battery pack is in an increasing trend to improve mileage and energy inside the pack is accordingly increasing, there is a need to design a structure satisfying reinforcing safety standards and securing safety of vehicles and drivers.

In this regard, when a thermal runaway phenomenon occurs in some battery cells in a battery module, there is an increasing need to develop a battery module that can alleviate or delay the occurrence of a thermal propagation phenomenon between battery cells.

### [DETAILED DESCRIPTION OF THE INVENTION]

### [Technical Problem]

It is an object of the present disclosure to provide a battery module in which a battery cell having a relatively low resistance is inserted into a battery cell stack included in the battery module, and a battery pack including the same. Particularly, it is an object of the present disclosure to provide a battery module in which when an abnormality is detected in some of the battery cells included in the battery module, a battery cell having a relatively low resistance is discharged at a faster speed to delay thermal propagation between battery cells, and a battery pack including the same.

The technical objects of the present disclosure are not limited to the aforementioned objects, and other objects which are not mentioned herein should be clearly understood by those skilled in the art from the following detailed description and the accompanying drawing.

### [Technical Solution]

According to one embodiment of the present disclosure, there is provided a battery module comprising: a battery cell stack including a plurality of first battery cells with at least one second battery cell being inserted between the plurality of first battery cells; a module frame that houses the battery cell stack; and a temperature sensor that is located inside the module frame, and detects whether the plurality of first battery cells and the at least one second battery cell are abnormal or not, wherein the second battery cell has a resistance smaller than that of the first battery cell.

The second battery cell may have a resistance that is 1/2 of or smaller than the resistance of the first battery cell.

The battery module may comprise at least one first busbar that electrically connects a cathode terminal and an anode terminal of the plurality of first battery cells to each other, and at least one second busbar that electrically connects the cathode terminal and the anode terminal of the at least one second battery cell to each other.

The cathode terminal and the anode terminal included in the plurality of first battery cells and the at least one second battery cell may protrude toward an upper part of the module frame.

At least one metal member is located between the at least one second busbar and the module frame, and the at least one metal member may be respectively connected to at least one moving member that is fixed to the module frame.

The metal member may extend along the at least one second busbar located adjacent to each other.

The metal member may have a rod shape made of copper (Cu).

The moving member may be made of ceramic.

The at least one second busbar and the at least one metal member are spaced apart from each other, and the plurality of first battery cells and the at least one second battery cell may be connected in series with each other.

When an abnormality is detected from at least one of the plurality of first battery cells and the at least one second battery cell through the temperature sensor, the moving member may lower the metal member toward the at least one second busbar.

When the moving member lowers the metal member toward the at least one second busbar, the metal member and the at least one second busbar may be electrically connected to each other, and the cathode terminal and the anode terminal of the at least one second battery cell may be connected in parallel to each other.

According to another embodiment of the present disclosure, there is provided a battery pack comprising the above-mentioned battery module.

### [Advantageous Effects]

According to embodiments, the present disclosure can provide a battery module in which a battery cell having a relatively low resistance is inserted into a battery cell stack included in the battery module, and a battery pack including the same. Particularly, the present disclosure can provide a battery module in which when an abnormality is detected in some of the battery cells included in the battery module, a battery cell having a relatively low resistance is discharged at a faster speed to delay thermal propagation between battery cells, and a battery pack including the same.

Effects of the present disclosure are not limited to the effects mentioned above, and additional other effects not mentioned herein will be clearly understood by a person of ordinary skill in the art from the detailed description and the accompanying drawing.

### [BRIEF DESCRIPTION OF THE DRAWINGS]

FIG. 1 is a top view showing a state in which an upper part of the module frame included in the battery module has been removed;
FIG. 2 is a perspective view showing a part of the battery cell stack included in the battery module of FIG. 1 in a normal state; and
FIG. 3 is a perspective view showing a part of the battery cell stack included in the battery module of FIG. 1 when a thermal runaway phenomenon occurs.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are not related to the description will be omitted to clearly describe the present disclosure, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

Further, throughout the description, when a portion is referred to as "including" or "comprising" a certain component, it means that the portion can further include other components, without excluding the other components, unless explicitly described to the contrary.

Further, throughout the description, when referred to as "planar", it means when a target portion is viewed from the upper side, and when it is referred to as "cross-sectional", it means when a target portion is viewed from the side of a cross section cut vertically.

Now, a battery module according to embodiments of the present disclosure will be described.

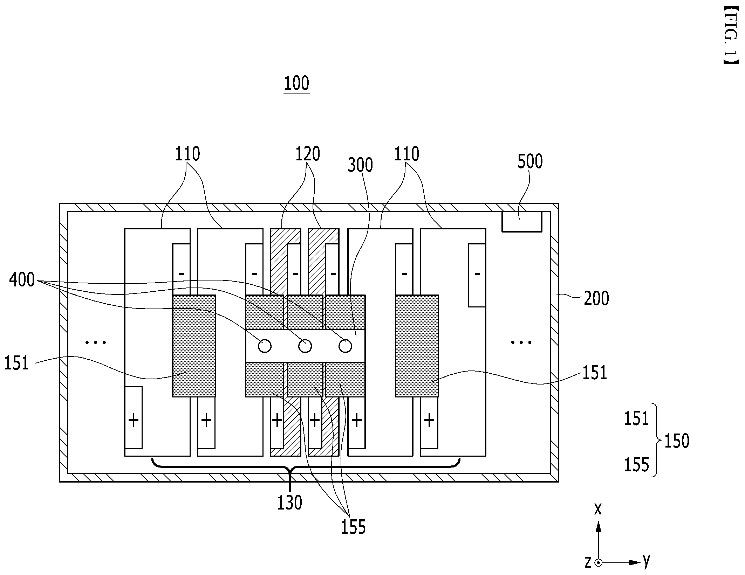

FIG. 1 is a top view showing a state in which an upper part of the module frame included in the battery module has been removed.

Referring to FIG. 1, a battery module 100 according to one embodiment of the present disclosure includes a battery cell stack 130 including a plurality of first battery cells 110 with at least one second battery cell 120 being inserted between the plurality of first battery cells 110; a module frame 200 that houses the battery cell stack 130; and a temperature sensor 500 that is located inside the module frame 200, and detects whether the plurality of first battery cells 110 and the at least one second battery cell 120 are abnormal or not.

The battery cell stack 130 may include a plurality of first battery cells 110 and at least one second battery cell 120. Wherein, the battery cell stack 130 may be formed by stacking the plurality of first battery cells 110 and at least one second battery cell 120 in one direction.

The stacking direction in the battery cell stack 130 may be a direction from one side surface to the other side surface of the module frame 200, and the one side surface and the other side surface of the module frame 200 may be two surfaces that face each other on the basis of the longitudinal direction of the module frame 200. As one example, in the battery cell stack 130, a plurality of first battery cells 110 and at least one second battery cell 120 may be stacked in a direction toward both sides surface of the module frame 200 facing each other on the y-axis as shown in FIG. 1.

As one example, a plurality of first battery cells 110 and at least one second battery cell 120 may be cylindrical battery cells of a pouch type, a prismatic type, or a jelly roll type. Preferably, a pouch-type or prismatic-type battery can be used to form a battery cell stack 130 including a large number of battery cells in a limited space inside the battery module 100. However, without being limited thereto, any shape that can easily house in the inside of the module frame 200 can be applied.

If the plurality of first battery cells 110 and the at least one second battery cell 120 included in the battery cell stack 130 is a pouch-type battery cell, the plurality of first battery cells 110 and the at least one second battery cell 120 may be produced by housing the electrode assembly in a pouch case of a laminate sheet including a resin layer and an inner layer, and then heat-sealing a sealing part of the pouch case. As one example, the plurality of first battery cells 110 and the at least one second battery cell 120 may be formed in a rectangular sheet-like structure. The number of the plurality of first battery cells 110 and the at least one second battery cell 120 may be adjusted according to circumstances.

In the battery cell stack 130, at least one second battery cell 120 may be inserted between the first battery cells 110 that are located adjacent to each other among the plurality of first battery cells 110. As one example, as shown in FIG. 1, the battery cell stack 130 may have a structure in which a pair of second battery cells 120 are inserted between the first battery cells 110 that are located adjacent to each other among the plurality of first battery cells 110. However, without being limited thereto, the position of at least one second battery cell 120 or the number of the second battery cells 120 inserted between the first battery cells 110 that are located adjacent to each other may be adjusted according to circumstances.

The second battery cell 120 may have a resistance smaller than that of the first battery cell 110. As one example, the second battery cell 120 may have a resistance that is 1/2 of or smaller than the resistance of the first battery cell 110. More specifically, the second battery cell 120 can be produced from the same components as the first battery cell 110, but can be produced so that the thickness of the cathode and anode included in the second battery cell 120, the loading amount of the cathode and anode active materials, the battery capacity, and the like are smaller than those of the first battery cell 110. As one example, the second battery cell 120 may be produced from the same components as the first battery cell 110, but can be produced so that the thickness of the cathode and anode included in the second battery cell 120, the loading amount of the cathode and anode active materials, the battery capacity, and the like are as small as 50% or less based on the first battery cell 110.

Thereby, in the battery module 100 according to the present embodiment, when a plurality of first battery cells 110 and at least one second battery cell 120 included in the battery cell stack 130 are rapidly discharged, the second battery cell 120 having a relatively low resistance may be relatively fast in the discharge speed while being not relative large in the amount of heat generation, so that the second battery cell 120 may be relatively lower in temperature than that of the first battery cell 110.

In particular, when an abnormal phenomenon such as a thermal runaway phenomenon occurs in some of the plurality of first battery cells 110 and at least one second battery cell 120, the second battery cell 120 may be rapidly discharged at a relatively fast speed, thereby preventing or delaying a thermal propagation phenomenon that may occur inside the battery module 100. In addition, the electric energy obtained by rapidly discharging the plurality of first battery cells 110 and at least one second battery cell 120 can be utilized to operate a cooling system (not shown) capable of cooling the battery module 100, thereby more effectively preventing or delaying a thermal propagation phenomenon that may occur inside the battery module 100.

The battery module 100 may include a module frame 200 that houses the battery cell stack 130. Referring to FIG. 1, the battery module 100 showing a state in which the upper part of the module frame 200 has been omitted is illustrated, but this is omitted for convenience of explanation, and the module frame 200 may also include the upper part of the module frame that covers the upper part of the battery cell stack 130. As one example, the module frame 200 may be a mono frame in the form of a metal plate material in which the upper and lower surfaces and both side surfaces are integrated. As another example, the module frame 200 may include a lower frame in the form of a metal plate material in which the lower surface and both side surfaces are integrated, and an upper cover covering the upper surface of the lower frame. As another example, the module frame 200 may be a frame having a structure in which two L-shaped frames are combined together. As another example, the module frame 200 may be a frame having a 4-plate structure in which an upper plate, a lower plate, a left plate, and a right plate are combined together. However, without being limited thereto, any frame shape that can protect the internal components of the battery module 100 can be applied to the present embodiment.

Here, each component of the module frame 200 may be joined by welding or the like while the corner portions corresponding to each other are in contact with each other, or may be fixed to each other through a separate fastening member. In addition, each component of the module frame 200 may be made from a metal material having a predetermined strength.

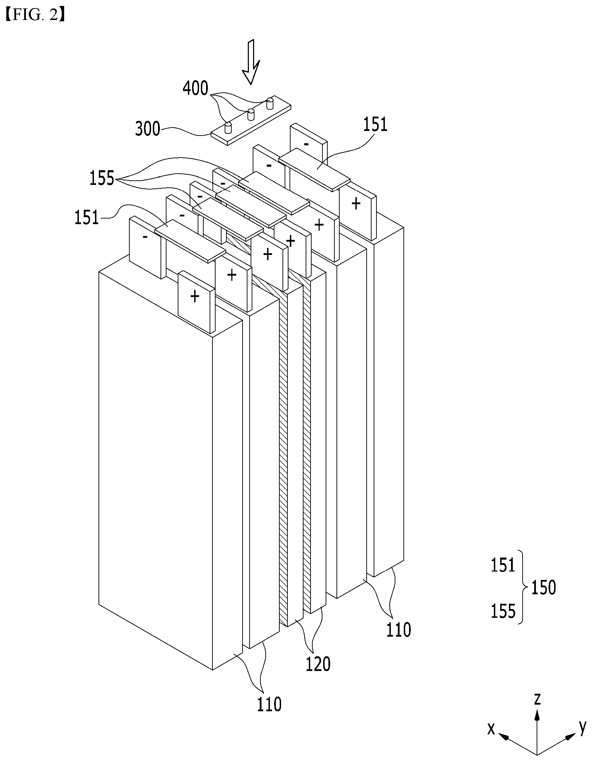

The battery module 100 may include a temperature sensor 500 that is located inside the module frame 200. As one example, as shown in FIG. 2, the temperature sensor 500 may be attached to the inner surface of the module frame 200. However, the position of the temperature sensor 500 inside the module frame 200 is not limited thereto, and any position that can detect the temperature of a plurality of first battery cells 110 and at least one second battery cell 120 may be applied to the present embodiment.

The temperature sensor 500 can detect whether the plurality of first battery cells 110 and at least one second battery cell 120 included in the battery cell stack 130 are abnormal or not. As one example, the temperature sensor 500 may use a component such as a thermistor or a thermocouple. Here, a K-type or T-type may be used as the thermocouple. However, without being not limited thereto, any sensor capable of detecting the temperatures of the plurality of first battery cells 110 and at least one second battery cell 120 inside the battery module 100 may be applied to the present embodiment.

Thereby, in the battery module 100 according to the present embodiment, as the temperature sensor 500 is located inside the module frame 200, the temperature of the plurality of first battery cells 110 and at least one second battery cell 120 can be easily detected, and the occurrence of an abnormal phenomenon (e.g., thermal runaway phenomenon) in a specific battery cell among the plurality of first battery cells 110 and at least one second battery cell 120 can be quickly detected.

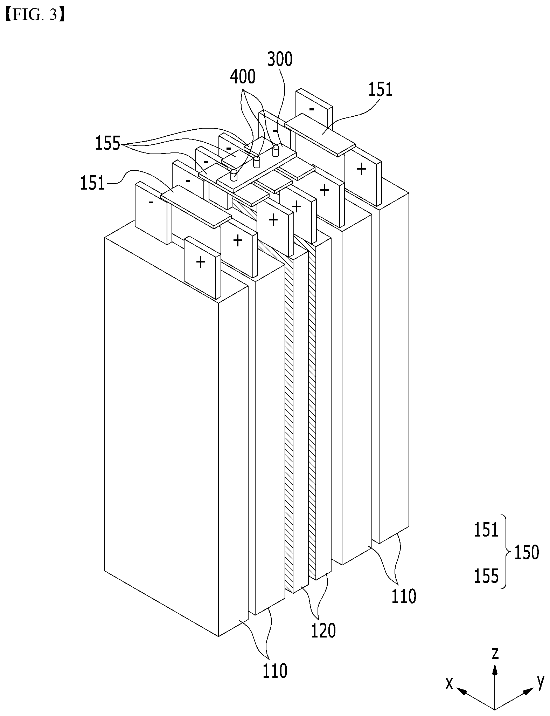

FIG. 2 is a perspective view showing a part of the battery cell stack included in the battery module of FIG. 1 in a normal state. FIG. 3 is a perspective view showing a part of the battery cell stack included in the battery module of FIG. 1 when a thermal runaway phenomenon occurs.

Referring to FIGS. 1 and 2, in the battery cell stack 130, a plurality of first battery cells 110 and at least one second battery cell 120 may be connected in series with each other.

More specifically, the battery module may further include a plurality of busbars 150 that electrically connect the plurality of first battery cells 110 and at least one second battery cell 120 to each other. The busbars 150 may electrically connect a cathode terminal and an anode terminal included in different battery cells from each other in the plurality of first battery cells 110 and at least one second battery cell 120. That is, the plurality of busbars 150 may connect a cathode terminal and an anode terminal included in the plurality of first battery cells 110 and at least one second battery cell 120 in series with each other.

Here, connecting in series may mean electrically connecting a cathode terminal and an anode terminal of different first battery cells 110 from each other, or electrically connecting a cathode terminal and an anode terminal of the first battery cell 110 to a cathode terminal and an anode terminal of the second battery cell 120, or electrically connecting a cathode terminal and an anode terminal of different second battery cells 120 from each other, as shown in FIGS. 1 and 2.

The plurality of busbars 150 may include at least one first busbar 151 that connects a cathode terminal and an anode terminal of the plurality of first battery cells 110 in series with each other, and at least one second busbar 155 that connects a cathode terminal and an anode terminal of the at least one second battery cell 120 in series with each other.

More specifically, at least one first busbar 151 can connect a cathode terminal and an anode terminal of a pair of first battery cells 110 located adjacent to each other among the plurality of first battery cells 110 in series with each other. At least one second busbar 155 can connect a cathode terminal and an anode terminal of a pair of second battery cells 120 located adjacent to each other among at least one second battery cell 120 in series with each other. In addition, at least one second busbar 155 can connect a cathode terminal and an anode terminal of the second battery cell 120 and a cathode terminal or an anode terminal of the first battery cell 110 located adjacent to the second battery cell 120 in series.

As one example, as shown in FIGS. 1 and 2, the busbar 150 may have a rectangular shape. However, the shape of the busbar 150 is not limited thereto, and any shape that can electrically connect the cathode terminal and the anode terminal included in different battery cells to each other may be applied to the present embodiment.

Referring to FIGS. 1 and 2, in the battery module 100 according to the present embodiment, the cathode terminal and the anode terminal included in the plurality of first battery cells 110 and at least one second battery cell 120 may protrude toward the upper part of the module frame 200. That is, the plurality of first battery cells 110 and at least one second battery cell 120 may be unidirectional battery cells in which the cathode terminal and the anode terminal protrude toward one direction. Here, the plurality of first battery cells 110 and at least one second battery cell 120 may be arranged in a direction in which the cathode terminal and the anode terminal face the upper part of the module frame 200.

At this time, a plurality of busbars 150 may be located between the battery cell stack 130 and the module frame 200. More specifically, as shown in FIGS. 1 and 2, the plurality of busbars 150 may be located on the cathode terminal and the anode terminal included in the plurality of first battery cells 110 and at least one second battery cell 120, respectively. In other words, the plurality of busbars 150 may be arranged at positions where the cathode terminal and the anode terminal included in the plurality of first battery cells 110 and at least one second battery cell 120 can be connected in series with each other.

Referring to FIGS. 1 to 3, the battery module 100 according to the present embodiment may have at least one metal member 300 located between a plurality of busbars 150 and the upper part of the module frame 200. More specifically, at least one metal member 300 may be located on at least one second busbar 155. As one example, as shown in FIGS. 1 and 2, at least one metal member 300 may be located on a plurality of second busbars 155 that are located adjacent to each other.

As one example, the metal member 300 may be a single member that extends along a plurality of second busbars 155 located adjacent to each other. As another example, the metal member 300 may be a single member that is located on a pair of second busbars 155 located adjacent to each other, and extends along a pair of second busbars 155.

As one example, the metal member 300 may be a rod-shaped member made of copper (Cu), aluminum (Al), gold, silver, or the like. However, the material and shape of the metal member 300 are not limited thereto, and any material and shape that are conductive to each other with the plurality of second busbars 155 may be included in the present embodiment.

Referring to FIGS. 1 to 3, at least one metal member 300 may be connected to at least one movable member 400 that is fixed to the upper part of the module frame 200. More specifically, one end of the moving member 400 may be fixed to the metal member 300, and the other end of the moving member 400 may be fixed to the upper part of the module frame 200.

When an abnormality is detected from at least one of the plurality of first battery cells 110 and the at least one second battery cell 120 through the temperature sensor 500, the moving member 400 may lower the metal member 300 toward the at least one second busbar 150. As one example, the moving member 400 may be connected to a driving means such as a motor (not shown) attached to the upper part of the module frame 200, and the moving member 400 may raise or lower the metal member 300 depending on the internal situation of the battery module 100.

As one example, the moving member 400 may be made of ceramic, rubber, plastic, fiberglass, quartz, etc. However, the material of the moving member 400 is not limited thereto, and any non-conductive material capable of cutting-off the electrical connection between the metal member 300 and the module frame 200 may be included in the present embodiment.

When the inside of the battery module 100 is in a normal state, the metal member 300 may be arranged to be spaced apart from the plurality of busbars 150 as shown in FIG. 2. Unlike the same, when an abnormal phenomenon (e.g., thermal runaway phenomenon) occurs inside the battery module 100, the metal member 300 may contact the second busbar 155 among the plurality of busbars 150 and be electrically connected to each other as shown in FIG. 3. That is, when the moving member 400 lowers the metal member 300 toward at least one second busbar 155, the metal member 300 and at least one second busbar 155 are electrically connected to each other, and the cathode terminal and the anode terminal of at least one second battery cell 120 may be connected in parallel to each other.

Thereby, in the battery module 100 according to the present embodiment, when an abnormal phenomenon occurs inside the battery module 100, the metal member 300 is electrically connected to the plurality of second busbars 155, respectively, so that at least one second battery cell 120 that is previously connected in series can be made to be connected in parallel to each other.

That is, the electrical connection state of at least one second battery cell 120 can be changed from a series connection to a parallel connection by the metal member 300, and the resistance of at least one second battery cell 120 can be relatively lowered compared to the series connection state. At this time, when the battery module 100 is rapidly discharged, the resistance of at least one second battery cell 120 is relatively lower than the series connection state, so that at least one second battery cell 120 can be discharged more quickly, and the amount of heat generation of at least one second battery cell 120 can also be lower. In other words, through this change in the electrical connection state, the battery module 100 according to the present embodiment can more effectively prevent or delay thermal propagation when an abnormal phenomenon occurs inside the battery module 100.

A battery pack according to another embodiment of the present disclosure includes the battery module described above. On the other hand, one or more battery modules according to the present embodiment may be packaged in a pack case to form a battery pack.

The above-mentioned battery module and a battery pack comprising the same can be applied to various devices. Such a device can be applied to a vehicle means such as an electric bicycle, an electric vehicle, or a hybrid vehicle, but the present disclosure is not limited thereto, and is applicable to various devices that can use a battery module and a battery pack comprising the same, which is also falls under the scope of the present disclosure.

Although the invention has been described in detail above with reference to preferred embodiments thereof, it will be appreciated by those skilled in the art that the scope of the present disclosure is not limited thereto, and various modifications and improvements can be made in these embodiment without departing from the principles and sprit of the invention, the scope of which is defined in the appended claims and their equivalents.

### [Description of Symbols]

100: battery module
110: first battery cell
120: second battery cell
130: battery cell stack
150: busbar
200: module frame
300: metal member
400: moving member
500: temperature sensor

## Claims

1. A battery module comprising:
a battery cell stack including a plurality of first battery cells with at least one second battery cell being inserted between the plurality of first battery cells;
a module frame that houses the battery cell stack; and
a temperature sensor that is located inside the module frame, and detects whether the plurality of first battery cells and the at least one second battery cell are abnormal or not,
wherein the second battery cell has a resistance smaller than that of the first battery cell.

2. The battery module according to claim 1, wherein:
the second battery cell has a resistance that is 1/2 of or smaller than the resistance of the first battery cell.

3. The battery module according to claim 1,
comprising at least one first busbar that electrically connects a cathode terminal and an anode terminal of the plurality of first battery cells to each other, and at least one second busbar that electrically connects the cathode terminal and the anode terminal of the at least one second battery cell to each other.

4. The battery module according to claim 3, wherein:
the cathode terminal and the anode terminal included in the plurality of first battery cells and the at least one second battery cell protrude toward an upper part of the module frame.

5. The battery module according to claim 3, wherein:
at least one metal member is located between the at least one second busbar and the module frame, and
the at least one metal member is respectively connected to at least one moving member that is fixed to the module frame.

6. The battery module according to claim 5, wherein:
the metal member extends along the at least one second busbar located adjacent to each other.

7. The battery module according to claim 6, wherein:
the metal member has a rod shape made of copper (Cu).

8. The battery module according to claim 5, wherein:
the moving member is made of ceramic.

9. The battery module according to claim 5, wherein:
the at least one second busbar and the at least one metal member are spaced apart from each other, and
the plurality of first battery cells and the at least one second battery cell are connected in series with each other.

10. The battery module according to claim 9, wherein:
when an abnormality is detected from at least one of the plurality of first battery cells and the at least one second battery cell through the temperature sensor,
the moving member lowers the metal member toward the at least one second busbar.

11. The battery module according to claim 10, wherein:
when the moving member lowers the metal member toward the at least one second busbar,
the metal member and the at least one second busbar are electrically connected to each other, and the cathode terminal and the anode terminal of the at least one second battery cell are connected in parallel to each other.

12. A battery pack comprising the battery module according to claim 1.
